# EUROPÄISCHE PATENTSCHRIFT

(11) **EP 0 570 842 B1**
(45) Veröffentlichungstag und Bekanntmachung des Hinweises auf die Patenterteilung: **14.08.1996**
(21) Anmeldenummer: 93107789.5
(22) Anmeldetag: 13.05.1993
(51) Int. Cl.: B01J 37/02, B01J 29/06, B01J 29/82, B01J 20/18, C10G 25/03

(54) **Verfahren zur Fixierung grosser zeolithischer und zeolithanaloger Molekularsieb-Kristalle auf Formkörpern**
Process for fixing a zeolite or a zeolite similar molecular sieve big crystal on a support
Procédé pour fixer de grands cristaux d'une zéolithe ou d'un tamis moléculaire analogue sur un support

(30) Priorität: 21.05.1992 DE 4216846
(43) Veröffentlichungstag der Anmeldung: 24.11.1993
(73) Patentinhaber: BASF Aktiengesellschaft, 67063 Ludwigshafen (DE)
(72) Erfinder: Mueller, Ulrich, Dr., W-6730 Neustadt (DE); Hoelderich, Wolfgang, Prof. Dr., W-6710 Frankenthal (DE); Schaefer, Hans Dieter, W-6701 Altrip (DE); Eiden, Ulrich, dr., W-6710 Frankenthal (DE); Woessner, Norbert, W-6710 Frankenthal (DE)

(56) Entgegenhaltungen:
- EP-A- 0 061 008
- EP-A- 0 316 159
- EP-A- 0 372 938
- EP-A- 0 499 799
- WO-A-92/02302
- US-A- 4 692 423
- US-A- 5 114 901

## Beschreibung

Die vorliegende Erfindung betrifft ein Verfahren zur Fixierung großer zeolithischer und zeolithanaloger Molekularsieb-Kristalle von 3 bis 500 µm auf Formkörpern, indem man einen Formkörper erweicht.

Heterogenkatalysierte Verfahren sind in der chemischen Technik weit verbreitet. Hierbei setzt man die Katalysatoren bevorzugt als Formkörper z.B. als Stränge, Extrudate, Tabletten, Wagenräder oder in Stern- und Kleeblattform ein, um einen Druckaufbau im Reaktor zu vermeiden. Andererseits können hierbei jedoch Stoff- und Wärmetransportprobleme im Katalysatorbett die Reaktionsführung stark beeinflussen.

Zur Umgehung dieser Problematik wurden verschiedene Reaktor- und Katalysatorformvarianten erprobt.

Aus der "Chemische Reaktionstechnik", Baerns, Hofmann, Renken, Thieme-Verlag, Stuttgart, Seite 163 bis 193 (1987) ist der Einsatz von Reaktoren, bei denen sich der Katalysator in unmittelbarer Nähe der Reaktorwand und sich Freiraum in der Reaktormitte longitudinal befindet, für heterogenkatalysierte Gasphasenreaktionen bekannt. Bei diesen Reaktortypen wird der Katalysator in einem eigens dafür angebrachten Käfig eingefüllt (Ind. Eng. Chem., Vol. 56., Seite 39 ff (1964)) oder beispielsweise über Aluminiumschlicker (wash coat) durch Auftränken an der Rekatorwand fixiert. Für zeolithische Katalysatoren ist diese Vorgehensweise z.B. aus JP 60/106 535 oder zur Herstellung dünner Filme auch aus JP 60/028 826 bekannt. Möglichkeiten zur weiteren Erzeugung zeolithischer Komposite nennen EP-A-55 044 und US-A-3 730 910.

Speziell für Pentasilzeolithe besteht noch die Möglichkeit zur Fixierung durch Aufkristallisation auf einen vorgeformten Träger nach der in EP-A-304 852 genannten Weise. Hieraus ergeben sich jedoch Nachteile durch die Vielzahl aufwendiger Arbeitsschritte. Aus kinetischen Gründen ist insbesondere bei Dehydrier- und Oxidationsreaktionen eine möglichst kleine Katalysatorteilchengröße wünschenswert, da nur bei kurzen Verweilzeiten im Katalysatorpellet, d.h. bei geringen Diffusionswegen der Edukte und Produkte zur aktiven Katalysatoroberfläche und zurück in die Gasphase, gute Ergebnisse erhalten werden. Daher werden kinetisch günstigere Formgebungen der Katalysatoren angestrebt. So werden beispielsweise bei der SCR-Technologie Katalysatoren in Form von Monolithen eingesetzt. Dies hat den Vorteil, daß der Druckverlust in der Reaktorfüllung deutlich vermindert wird.

Die Herstellung solcher Monolithe ist schwierig und erfordert besondere Kenntnisse hinsichtlich der Zugabe von Zuschlagsstoffen zur Aktivmasse, um gute Festigkeiten des Formkörpers zu erzielen, sowie einen erhöhten Arbeitsaufwand z.B. bei der Durchführung einer stufenweisen Trocknung und Kalzinierung in langen Schachtöfen.

Die zuvor beschriebenen Verfahren zur Fertigung von Heterogenkatalysatoren haben den Nachteil, daß sie viele Verfahrensschritte umfassen. Insbesondere bei einer beabsichtigten Verwendung in der Katalyse oder Stofftrennung kann sich dies jedoch nachteilig auf die Reproduzierbarkeit auswirken. Zudem ist man bislang auf wenige Bindermaterialien wie Aluminiumoxide, Tonmineralien, Cordierit oder Siliziumdioxid begrenzt, die ihrerseits beispielsweise unerwünschte katalytische Aktivität aufweisen können.

Treten bei der katalytischen Umsetzung exotherme Reaktionen auf, so ist es mit einem konventionellen Festbettreaktor, insbesondere bei Reaktionen im niederen Druckbereich, schwer möglich, die freigesetzte Wärme schnell abzuführen. Dies kann zur Ausbildung von Temperaturspitzen im Reaktor beitragen, die zu einer irreversiblen Schädigung des Katalysators führen können.

Verlaufen katalytische Reaktionen hingegen endotherm, so müssen aufwendige verfahrenstechnische Maßnahmen ergriffen werden, um beispielsweise den Produktstrom mit Hilfe einer genau regulierbaren Beheizungsstrecke vorzuwärmen.

Es bestand daher die Aufgabe, für die Anwendung von Molekularsiebkristallen eine Möglichkeit zu finden, diesen zuvor genannten Nachteilen abzuhelfen und diese Materialien dauerhaft so zu fixieren, daß sie vorteilhaft z.B. in der Katalyse und Stofftrennung eingesetzt werden können.

Demgemäß wurde ein neues und verbessertes Verfahren zur Fixierung großer zeolithischer und zeolithanaloger Molekularsieb-Kristalle von 3 bis 500 µm auf Formkörpern gefunden, welches dadurch gekennzeichnet ist, daß man den Formkörper erweicht.

Das erfindungsgemäße Verfahren hat gegenüber bestehenden Methoden den Vorteil, daß man die Kristalle nicht mehr mit Hilfe eines Bindermaterials zu Katalysatoren oder Adsorbentien verformen muß, sondern direkt auf einen Formkörper aufbringt und diesen beschichteten Formkörper dann als Reaktor oder Adsorber einsetzt.

Vorteile des erfindungsgemäßen Verfahrens sind insbesondere, daß weniger Aktivmasse an Katalysator oder Adsorbens verwendet werden muß, als bei konventioneller Arbeitsweise, daß hohe Gasgeschwindigkeiten bei guter Wärmeübertragung zwischen Reaktorwand und Katalysator realisierbar sind und daß eine einfache Regenerierung erfolgen kann.

Das erfindungsgemäße Verfahren läßt sich wie folgt durchführen:

Die großen Primärkristallite von Zeolithen bzw. von zeolithanalogen Molekularsieben mit Kantenlängen von 3 bis 500 µm können in Gegenwart und Kontakt mit einem entsprechenden Formkörper bei einer Temperatur, die zum einen unterhalb der Umwandlungs- oder Schmelztemperatur der Molekularsiebkristalle liegt und zum anderen so hoch gewählt werden, daß der entsprechende Formkörper lediglich oberflächlich erweichte ohne jedoch zu schmelzen.

Unter Zeolithen versteht man dabei kristalline Aluminosilikate, die eine hochgeordnete Struktur mit einem dreidimensionalen Netzwerk von SiO₄-und AlO₄-Tetraedern besitzen, die durch gemeinsame Sauerstoffatome verbunden sind. Das Verhältnis der Si- und Al-Atome zu Sauerstoff beträgt 1 : 2 (siehe Ullmans Encyklopädie d. Techn. Chemie, 4. Auflage, Band 24, Seite 575 (1983)). Die Elektrovalenz der Aluminium enthaltenden Tetraeder ist durch Einschluß von Kationen in den Kristall, z.B. eines Alkali- oder Wasserstoffions ausgeglichen. Ein Kationenaustausch ist möglich. Die Räume zwischen den Tetraedern sind vor der Dehydratisierung durch Trocknen bzw. Kalzinieren von Wassermolekülen besetzt.

Die Zeolithe werden zumeist in der aciden H-Form oder neutralen Alkali-Form angewendet. In den Zeolithen können anstelle von Aluminium auch andere Elemente, wie B, Ga, Fe, Cr, V, As, Sb, Bi oder Be oder deren Gemische in das Gitter eingebaut werden, oder das Silicium kann durch ein anderes vierwertiges Element, wie Ge, Ti, Zr, Hf ersetzt werden.

Entsprechend ihrer Struktur werden Zeolithe in verschiedene Gruppen unterteilt. Eine Zusammenstellung solcher Strukturen wird in der Literatur gegeben (W.M. Meier und D.H. Olson, "Atlas of Zeolite Structure Types", 2.Auflage, Butterworths, London 1987).

Für das erfindungsgemäße Verfahren in Betracht kommende Molekularsiebe sind Zeolithe aus der Mordenit-Gruppe, Zeolithe vom Faujasit-Typ, z.B. Y-, X- oder L-Zeolithe. In diese Gruppe von Zeolithen gehören auch die sogenannten "ultrastabilen" Zeolithe des Faujasittyps, d.h. dealuminierte Zeolithe. Verfahren zur Herstellung solcher Zeolithe sind beschrieben in "Catalysis by Zeolites" Band 5 aus "Studies in Surface Science and Catalysis" ed. B. Imelik et al. Elsevier Scientific Publishing Comp. 1980, S. 203 und "Crystal Structures of Ultra-stable Faujasites" Advances in Chemistry Series Nr. 101, American Chemical Society Washington, DC, S. 226 ff (1971), und in US-A-4 512 961.

Vorteilhaft verwendet man Zeolithe und zeolithanaloge Molekularsiebe mit den Strukturtypen AFI, FAU, LTA, DOH, DDR oder Mischstrukturen von DOH/DDR, sowie besonders vorteilhaft Zeolithtypen der Pentasile mit MFI- oder MEL-Struktur.

Solche Pentasile haben als Grundbaustein einen aus SiO₄-Tetraedern aufgebauten Fünfring gemeinsam. Sie sind durch ein hohes und variierbares SiO₂/Al₂O₃-Verhältnis gekennzeichnet, sowie durch Porengrößen, die zwischen denen der Zeolithe vom Typ A und denen vom Typ X oder Y liegen.

Diese Zeolithe können verschiedene chemische Zusammensetzungen aufweisen. Es handelt sich hierbei um Alumino-, Boro-, Eisen-, Titan-, Vanadium-, Beryllium-, Gallium-, Chrom-, Arsen-, Antimon- und Wismutsilikatzeolithe oder deren Gemische sowie Alumino-, Boro-, Gallium- und Eisengermanat-zeolithe oder deren Gemische.

Der Aluminosilikatzeolith wird z.B. aus einer Aluminiumverbindung, vorzugsweise Al(OH)₃, Al₂(SO₄)₃ oder einer hydrolysierbaren organischen Aluminiumverbindung als Vorstufe und einer Siliciumkomponente, vorzugsweise hochdispersem Siliciumdioxid oder kolloidal gelöstem Siliciumdioxid in wäßriger Aminlösung, insbesondere in Polyaminen, wie 1,6-Hexandiamin- oder 1,3-Propandiamin- oder Triethylentetramin-Lösung mit oder insbesondere ohne Alkali- oder Erdalkalizusatz bei 100 bis 220°C unter autogenem Druck hergestellt.

Hierzu gehören auch die isotaktischen Zeolithe nach EP-A-34 727 oder EP-A-4 504. Die erhaltenen Aluminosilikatzeolithe weisen je nach Wahl der Ausgangsstoffmengen ein SiO₂/Al₂O₃-Verhältnis von 10 bis 40 000 auf. Derartige Aluminosilikatzeolithe kann man auch in etherischem Medium, wie Diethylenglykoldimethylether, Triglyme, Tetraglyme, in alkoholischem Medium, wie Methanol bzw. 1,4-Butandiol bzw. 1,6-Hexandiol bzw. Polyole oder in Wasser synthetisieren.

Die Herstellung von großen monodispersen und alkalifrei hergestellten Aluminosilikatzeolithen ist beschrieben von Müller et al., A.C.S. Symp. Ser. Vol. 398 (1989) 346 bis 359. Nach dieser Herstellmethode können Zeolithgrößen bis zu 300 µm mit hohen Feststoffausbeuten erreicht werden.

Die Synthese großer Borosilikatzeolithkristalle mit MFI-Struktur ist aus DE-A-41 20 918 bekannt. Die über die Kristallit-Längsachse gemessene Größe liegt zwischen 2 und 150 µm. Die Herstellung ist dadurch gekennzeichnet, daß man eine SiO₂-haltige Mischung aus Wasser, einer Tetraalkylammoniumverbindung, einer Borkomponenten und Ammoniak in Abwesenheit eines Metallhydroxids oder eines Metallsalzes bei einem molaren Verhältnis von Ammoniak/Tetraalkylammonium von 3 : 1 bis 150 : 1 hydrothermal umsetzt.

Dieses Verfahren bietet auch die Möglichkeit durch die Verwendung z.B. einer aus Tetrapropylammoniumsalzen und Tetrapropylammoniumhydroxid zusammengesetzten Templatmischung die Größe der entstehenden Kristalle und deren Größenverteilung in einfacher Weise durch die Zusammensetzung der Reaktionsmischung zu beeinflussen und benötigt dabei nur geringe Mengen an Tetraalkylammonium von Tetraalkylammonium/SiO₂ = 0,042 : 1 bis 0,2 : 1, vorzugsweise von 0,042 : 1 bis 0,15 : 1.

Insbesondere ist es möglich, daß die entstehenden Borsilikat-Zeolithe zum überwiegenden Teil in Form einheitlicher großer Partikel, die ohne nennenswerte Agglomeration anfallen, zu erhalten, wenn man als molare Verhältnisse der Reaktionsmischung im Bereich von SiO₂/B₂O₃ mit 10 : 1 bis 1 500 : 1, bevorzugt von 10 bis 250, besonders bevorzugt von 10 bis 100 arbeitet und/oder dabei eine Verdünnung von SiO₂/H₂O mit 0,07 : 1 bis 0,025 : 1, bevorzugt von 0,05 : 1 bis 0,04 : 1 einhält. Dieses alkalifreie Verfahren macht es möglich, daß darüber hinaus das Material nach einer Temperaturbehandlung bei 350 bis 600°C, bevorzugt bei 400 bis 550°C und besonders bevorzugt bei 450 bis 500°C direkt und ohne zusätzlichen Ionenaustausch und insbesondere aufgrund der Kristallitgröße von mehr als 2 µm, d.h. 2 bis 150 µm, bevorzugt 3 bis 120 µm, besonders bevorzugt 5 bis 80 µm ohne weitere Formgebung in einer wirksamen H-Form vorliegt und als Katalysator verwendet werden kann. Da die solchermaßen hergestellten Zeolithe sehr monodispers in der Partikelgrößenverteilung sind und zudem kaum als Primärkristallite agglomerieren eignen sie sich besonders für die erfindungsgemäß beschriebene Fixierung.

Die analoge Herstellung von für katalytische Oxidations- und Ammonoxidationsreaktionen geeigneten großen Titanzeolithkristallen mit MFI-Struktur nennt DE-A-41 38 155.

Eisensilikatzeolithe erhält man z.B. aus einer Eisenverbindung, vorzugsweise Fe₂(SO₄)₃ und einer Siliciumverbindung, vorzugsweise hochdispersem Siliciumdioxid in wäßriger Aminlösung, insbesondere 1,6-Hexan-diamin, mit oder ohne Alkali- oder Erdalkalizusatz bei 100 bis 220°C unter autogenem Druck.

Zu den verwendbaren siliciumreichen Zeolithen (SiO₂/Al₂O₃ > 10) gehören auch die sogenannten ZSM-Typen (Fa. Mobil), Ferrierit, NU-1, NU-2, Silicalit® (Firma Union Carbide/UOP), Zeolith-β oder siliziumreiche, dealuminierte Y-Zeolithe.

Weiterhin lassen sich für das erfindungsgemäße Verfahren Kristalle des Strukturtyps DOH, DDR oder Mischkristalle aus DOH/DDR-Strukturen einsetzen. Die Herstellung solcher Kristalle ist von Müller et al., "Recent Advances in Zeolite Science" (Editors Klinowski and Barrie) Elsevier, Amsterdam (1989), 241 bis 252 beschrieben. Die Abmessungen der Primärpartikel kann bis zu 200 µm erreichen.

Liegen die Zeolithe aufgrund der Art der Herstellung nicht in der aciden H-Form vor, sondern z.B. in der Alkali-, Erdalkali-Form, so kann diese durch Ionenaustausch z.B. mit Ammoniumionen und anschließende Calcinierung oder durch Behandlung mit Säuren vollkommen oder partiell in die gewünschte H-Form überführt werden.

Für das erfindungsgemäße Verfahren geeignet sind auch mikroporöse Phosphate wie sie von E.M. Flanigen et al. in "Alumophosphate molecular sieves and the periodic table" Pure & Appl. Chem. Vol 58, Nr. 10 S. 1351 bis 1358 (1986), genannt werden.

Aus der US-A-4 310 440 sind eine Vielzahl solcher mikroporöser Alumophosphate (Kurzbezeichnung: AlPOs) bekannt. Danach werden diese hergestellt, indem als Ausgangskomponenten neben phosphor- und aluminiumhaltigen Verbindungen sogenannte Template (Strukturbildner) verwendet werden. Als Template kommen eine Vielzahl organischer Stickstoff-Verbindungen (z.B. Amine, Ammoniumverbindungen, Stickstoff-Heterocyclen) in Betracht. Je nach Art des Templats und Reaktionsbedingungen sind viele verschiedene Aluminiumphosphatstrukturen herstellbar, die durch ihre unterschiedlichen Röntgenbeugungsdaten charakterisiert werden.

Die vorgenannten Alumophosphate unterscheiden sich in ihrem Aufbau des Hohlraumsystems, also in Porengröße, Porenvolumen und Oberfläche. Diese Unterschiede bedingen unterschiedliche Eigenschaften, wie Adsorptionskapazitäten, die Fähigkeit zur Trennung bestimmter Stoffe oder katalytische Aktivität.

Alumophosphate bestehen aus einem Kristallgitter, welches aus TO₄-Tetraedern aufgebaut ist, wobei als Tetraederatome T Phosphor und Aluminium auftreten. Im allgemeinen sind die Anzahl der AlO₄- und der PO₄-Tetraeder gleich, so daß das Kristallgitter keine Ladung trägt und daher auch keine ladungsausgleichenden Kationen vorhanden sind.

Mikroporöse Alumophosphate finden Anwendung als Adsorbentien, sowie als Katalysatoren oder als Katalysatorträger (Übersichtsartikel: E.M. Flanigen et al.: "Structural, synthetic and physicochemical concepts in aluminophosphate-based molecular sieves" in "Innovation in Zeolite Materials Science" P.J. Grobet et al. (Hrsg.), Elsevier, 1988, Seite 13 bis 27).

Die unter hydrothermalen Bedingungen hergestellten Aluminiumphosphate sind z.B. AlPO-5, AlPO-8, AlPO-9, AlPO-11, AlPO-12, AlPO-14, AlPO-21, AlPO-25, AlPO-31 und AlPO-33 sowie MCM 9. Synthesen dieser Verbindungen sind in der EP-A-132 708, US-A-4 310 440, und Wilson et al. J. Am. Chem. Soc. 104 (1982) 1146, beschrieben.

Beispielsweise das AlPO₄-5 (AFI) wird synthetisiert, indem man Orthophosphorsäure mit Pseudoboehmit (Catapal® SB) in Wasser homogen mischt, zu dieser Mischung Tetrapropylammoniumhydroxid gibt und danach bei ca. 150°C 20 bis 60 h unter autogenem Druck in einem Autoklaven umsetzt. Das abfiltrierte AlPO-5 wird bei 100 bis 160°C getrocknet und bei 450 bis 550°C calciniert.

Die Synthese besonders großer Kristalle von AlPO-5 mit AFI-Struktur wird von Müller et. al. in A.C.S. Symp. Ser., Vol. 398 (1989) 346 bis 359 beschrieben. Danach können AFI-Alumophosphat-Kristalle mit Längen bis zu 500 µm hergestellt werden.

Die Herstellung von einem als AlPO₄-11 bezeichneten mikroporösen Alumophosphat wird in der US-A-4 310 440, Beispiele 32 bis 36 beschrieben. Danach wird die Verbindung synthetisiert, indem als Ausgangskomponenten Phosphorsäure, eine Aluminiumverbindung sowie ein Dialkylamin z.B. Di-n-propylamin oder Diisopropylamin eingesetzt werden. Die Mischung wird hydrothermal behandelt. Als Produkt entsteht zunächst ein mikroporöses Alumophosphat, dessen Poren mit dem Templat gefüllt sind. Durch Calcinieren dieser Verbindung läßt sich das Templat entfernen.

Nach der US-A-4 440 871 ist es möglich, in das Kristallgitter dieser Alumophosphate zusätzlich Silicium einzulagern, wodurch man zu den Silicoalumophosphaten (Kurzbezeichnung: SAPOs) gelangt.

Die Synthese der SAPOs verläuft in analoger Weise zu der der AlPOs, wobei zusätzlich eine Siliciumquelle zu dem Syntheseansatz gegeben wird. Die Ladung der im Kristallgitter der SAPOs enthaltenden AlO₄-,PO₄- und SiO₄-Tetraeder kompensieren sich im allgemeinen nicht, so daß sich ein geladenes Kristallgitter ergibt, dessen Ladung durch Gegenionen ausgeglichen sein muß.

Aus diesem Grund können SAPOs neben den schon bei den AlPOs erwähnten Anwendungen auch als Ionenaustauscher Verwendung finden. Weiterhin stellen SAPOs in ihrer H-Form feste Säure dar, können demnach z.B. als saure Katalysatoren eingesetzt werden.

Die Synthese dieser Verbindungen wird z.B. in der EP-A-103 117 oder US-A-4 440 871 beschrieben. Diese Siliciumaluminiumphosphate besitzen Zeolithstruktur. SAPO's werden hergestellt durch Kristallisation aus wäßriger Mischung bei 100 bis 250°C und autogenem Druck während 2 Stunden bis 2 Wochen, wobei die Reaktionsmischung aus einer Silicium-, Aluminium- und Phosphorkomponente in wäßrigen aminoorganischen Lösungen umgesetzt wird.

Die Herstellung von einem als SAPO-11 bezeichneten mikroporösen Silicoalumophosphat wird in der US-A-4 440 871, Beispiele 15 bis 22 beschrieben und erfolgt in analoger Weise wie beim AlPO-11 beschrieben, wobei lediglich dem Reaktionsansatz zusätzlich eine reaktive Siliciumquelle zugegeben wird.

Die Struktur von AlPO₄-11 und SAPO-11 ist identisch und wurde beispielsweise von Bennett et al. (Zeolites, Vol. 7, (1987) Seite 160) beschrieben. Die Struktur ist unter der Bezeichnung AEL als Kristallstruktur bei Meier und Olson ("Atlas of Zeolite Structure Types" 2nd Ed., Butterworths, London, 1987) klassifiziert.

Eine neue Möglichkeit zur Synthese von AlPO₄-11 und SAPO-11 unter Verwendung von 1,2-Bis(4-pyridyl)ethan nennt DE-A-41 31 268.

Als Siliciumaluminiumphosphate eignen sich auch z.B. ZYT-5, ZYT-6, ZYT-7, ZYT-9, ZYT-11 und ZYT-12 (JP 59/217 619). Die nach dem erfindungsgemaßen Verfahren unter Einsatz der vorgenannten Zeolithe und zeolithanalogen Molekularsiebkristalle hergestellten Reaktoren lassen sich in der Heterogenkatalyse verwenden für nukleophile und elektrophile Substitutionen, für Addition- und Eliminierungsreaktionen für Doppelbindungs- und Skelettisomerisierungen einschließlich Umlagerungen und für Redoxreaktionen z.B. für Alkylierungen, Isomerisierungen, Disproportionierungen, Acylierungen, Cyclisierungen, Hydratisierungen, Dehydratisierungen, Aminierungen, Hydrierungen, Dehydrierungen, Dehydrocyclisierungen, Hydroxylierungen, Oxidationen, Epoxidierungen, Skelettisomerisierungen sowie Kombinationen dieser Reaktionen, zur gezielten Umsetzung organischer Moleküle.

Dabei sind besonders zu nennen Alkylierungen und Isomerisierungen von Xylolen, Phenolen, Kresolen, Ethylbenzolen, kernsubstituierten Anilinen, Dihydroxybenzolen, und analogen halogenierten isomeren Aromaten.

Technisch wichtige Reaktionen sind dabei beispielsweise die in US-A-4 670 616 oder EP-A-54 385 genannten Alkylierungs- und Isomerisierungsreaktion zum p-Xylol.

Die nach dem erfindungsgemäßen Verfahren hergestellten Reaktoren können darüber hinaus bei der Umwandlung von Methanol zu einem Gemisch von C₂- bis C₄-Olefinen eingesetzt werden. Umsetzungen dieser Art sind beispielsweise in W. Hölderich et al., "Aluminosilicate and Borosilicate Zeolithes and their use in the conversion of methanol to olefins" in D. Olson and A. Bisio (eds.) Proceedings of 6th YZC, Reno, Nev. 1983, Butterworths (1984), Seite 545 bis 555 beschrieben oder auch in W. Hölderich, "Zeolites: Catalysis for the synthesis of organic compounds", Elsevier, Studies Surf. Sci, Catal., Vol. 49, Amsterdam (1989), Seite 69 bis 93, und W. Hölderich und H. van Bekkum, Stud. Surf. Sci. Catal. 58 (1991), 631 bis 726.

Umlagerungsreaktionen die mit den erfindungsgemäß hergestellten Reaktoren vorteilhaft durchgeführt werden können sind beispielsweise Synthesen von Phenylacetaldehyden oder Phenylethanolen wie sie in der DE-A-37 40 270 und in der DE-A-38 01 106 genannt sind.

Bei der Fertigung von Reaktoren oder Adsorbern nach dem erfindungsgemäßen Verfahren kann man so verfahren, daß man ausgewählte Formkörper in einem Ofen oder einer verschiebbaren Heizzone auf die Erweichungstemperatur vorheizt. Auf die solchermaßen vorgeheizte Formkörperoberfläche wird ein rieselfähiges Pulver großer Zeolith- oder zeolithanaloger Molekularsiebkristalle kontinuierlich aufgestäubt. Die Kristalle bleiben dabei in einer dünnen Schicht von ca. 1 bis 5 Kristalllagen an der erweichten Formkörperoberfläche haften und sind nach dem Abkühlen des beschichteten Formkörpers dauerhaft daran fixiert. Bei zu geringer Kristallitgröße besteht die Gefahr, daß die Kristalle zu einem Großteil in die aufgeweichte Formkörperoberfläche einsinken und bei der später angestrebten Verwendung nicht mehr für Stofftrennungen oder katalytische Umsetzungen zugänglich sind. Nichtanhaftende Kristalle können für weitere Beschichtungen abgetrennt und wiedereingesetzt werden.

Als geeignet haben sich Kristalle einer Größe von mindestens 3 µm erwiesen, wobei sich dies bei unregelmäßig geformten Kristallen auf die jeweils kleinste Ausdehnungsrichtung bezieht.

Bei alkalifrei hergestellten Pentasilkristallen kann für die erfindungsgemäße Beschichtungsmethode die aminhaltige Form der Kristalle eingesetzt werden, wenn man Formkörper beschichtet, deren Erweichungstemperatur oberhalb von 400°C und insbesondere oberhalb von 500°C liegt. Dabei unterstützt das exotherm verlaufende Abbrennen der in den Zeolithporen noch vorhandenen Amin-, Ammonium- oder Tetraalkylammoniumformen die Fixierung der Zeolithkristalle an der Festkörperoberfläche. Auf diese Weise ist es möglich, direkt aus der 'as made'-Form alkalifrei hergestellter Kristalle einen für katalytische Umsetzungen verwendbaren Formkörper mit Zeolithkristallen in der aziden H-Form herzustellen. Entgegen einer konventionellen Aufarbeitung der Zeolithpulver und einer weiteren Verarbeitung zu einem Trägerkatalysator, erspart man sich mit dem erfindungsgemäßen Vorgehen energieaufwendige Kalzinierungs- und Verformungschritte unter gleichzeitiger Reduktion des Anteils an teurer Zeolithaktivmasse und unter Verzicht auf zusätzliches Bindermaterial.

Das erfindungsgemäße Verfahren ist insofern vorteilhaft, als man inerte, leicht zu verformende Werkstoffe, wie beispielsweise Glas in Form von Kugeln, porösem Grieß, Röhren, Rohrwendeln, Platten, Stangen, Kolben in einem einzigen Arbeitsschritt so beschichtet, daß man für eine spätere Verwendung lediglich den chemisch inerten Träger mit einer geringen Menge an zeolithischer Aktivmasse oberflächlich und dauerhaft belegt hat. Insbesondere bei Glasrohren kann man die Innenwand erfindungsgemäß so beschichten, daß es bei einer Verwendung als Wandreaktor möglich ist, durch den noch verbleibenden freien Rohrquerschnitt das Reaktionsmedium während der katalytischen Umsetzung mit hoher Geschwindigkeit und weitgehend ohne Druckabfall längs des Reaktors zu fahren. Strebt man hohe Selektivitäten bei einer zeolithkatalysierten Umsetzung an, so kann man mit dem erfindungsgemäß hergestellten Wandreaktor nichtumgesetztes Ausgangsprodukt in den Eingangsstrom zurückfahren und somit den Umsatz an Zielprodukt erhöhen.

Da bei dieser Art des Wandreaktors die Aktivkomponente fest mit der Formkörperoberfläche verankert ist, ergibt sich eine sehr gute Wärmeübertragung zwischen Katalysator und Reaktorwandfläche, so daß für einen angestrebten isothermen Betrieb einer stark exothermen Reaktion, das Auftreten von Temperaturspitzen vermieden wird.

Analog läßt sich beim Einsatz eines erfindungsgemäßen Rohres oder einer Platte bei Stofftrennproblemen der schnelle Wärmeübergang vorteilhaft nutzen, um annähernd isobar zwischen Ad- und Desorptionschritt mittels schneller Temperaturvariation umschalten zu können.

Für die Verwendung als Wandreaktor oder als Adsorber ergibt sich zudem der Vorteil, daß man normgerechte und erfindungsgemäß beschichtete Bauteile so verwenden kann, daß man sie für die jeweilige Anwendung modular aufbauen kann. Dies ist insbesondere beim Einsatz als Wandreaktor von Vorteil, da desaktivierte Modulteile schnell und im Gegensatz zu konventionell betriebenen Reaktoren ohne den Anfall von stark verunreinigten Gemischen aus Katalysatorabrieb und Produkt gewechselt werden können.

Aufgrund des geringen Anteils an Aktivmasse genügt im Regelfall ein kurzzeitiges Durchspülen der Module mit Luft bei Temperaturen von 300 bis 550°C zur Regeneration.

Die nachfolgenden Beispiele belegen das erfindungsgemäße Verfahren sowie dessen Vorteile bei katalytischen Reaktionen und adsorptiven Stofftrennungen.

### Beispiele

### Beispiel 1

Dieses Beispiel erläutert die Synthese einheitlicher großer Borpentasilkristalle.

In einem Stahlautoklaven mit Rührvorrichtung wurden 2,22 kg Tetrapropylammoniumbromid, 7,96 kg Kieselsol LUDOX® AS-40, 8,9 kg deionisiertes Wasser und 386 g Borsäuretrimethylester vorgelegt. Zu dieser Suspension wurden 7,2 kg einer wäßrigen Ammoniaklösung (25 Gew.-%) zugegeben. Die entstandene Suspension wurde im verschlossenen Autoklaven unter Rühren (100 U/min) auf 185oC hochgeheizt und im Laufe von 168 Stunden zur Kristallisation gebracht. Nach dem Abkühlen wurde der Feststoff abfiltriert, neutralgewaschen, bei 120oC getrocknet und abschließend bei 500oC temperaturbehandelt.

Die Ausbeute an Borsilikatzeolith, bezogen auf eingesetztes SiO₂, betrug 97 %. Die chemische Analyse des Produktes ergab eine Zusammensetzung von 96,5 Gew.-% SiO₂, 1,48 Gew.-% B₂O₃ und Spuren von 140 ppm Natrium, sowie 90 ppm Al₂O₃. Das Produkt war vollkristallin und zeigte das für ein Borpentasil mit MFI-Struktur typische Pulverdiffraktogramm.

Die Kristalle hatten bei enger Größenverteilung eine mittlere Größe von 12 µm.

### Beispiel 2

Dieses Beispiel erläutert die Synthese einheitlicher großer Kristalle bei langer Kristallisationszeit in einem statischen Experiment.

In einem teflonausgekleideten Stahlautoklaven wurden 6,9 g Tetrapropylammoniumbromid, 75,3 g Kieselsol LUDOX® AS-408, 83,1 g deionisiertes Wasser und 3,66 g Borsäuretrimethylester vorgelegt. Zu dieser Suspension wurden 68,8 g eine wäßrigen Ammoniaklösung (25 Gew.-%) zugegeben.

Die entstandene Suspension wurde homogenisiert, im verschlossenen Autoklaven auf 185°C hochgeheizt und im Laufe von 168 Stunden zur Kristallisation gebracht. Nach dem Abkühlen wurde der Feststoff abfiltriert, neutralgewaschen, bei 120°C getrocknet und abschließend bei 500°C temperaturbehandelt. Die Ausbeute an Borsilikatzeolith bezogen auf eingesetztes SiO₂ betrug 98 %.

Die chemische Analyse des Produktes ergab eine Zusammensetzung von 97,6 Gew.-% SiO₂, 1,7 Gew.-% B₂O₃ und Spuren von 120 ppm Natrium. Das Produkt war vollkristallin und zeigte das für ein Borpentasil mit MFI-Struktur typische Pulverdiffraktogramm. Die Kristalle hatten bei enger Partikelgrößenverteilung eine mittlere Größe von 50 µm.

### Beispiel 3

Dieses Beispiel erläutert die Synthese von Borsilikatzeolith unter Verwendung einer Mischung aus Tetrapropylammoniumhydroxid und Tetrapropylammoniumbromid bei zusätzlich verkürzter Synthesezeit.

In einem Stahlautoklaven mit Rührvorrichtung wurden 34,7 g Tetrapropyl-ammoniumbromid, 468 g Kieselsol LUDOX® AS-40, 524 g deionisiertes Wasser und 22,8 g Borsäuretrimethylester vorgelegt. Zu dieser Suspension wurden 423 g einer wäßrigen Ammoniaklösung (25 Gew.-%) und 38,8 g einer wäßrigen Tetrapropylammoniumhydroxid-Lösung (20 Gew.-%) zugegeben.

Die entstandene Suspension wurde im verschlossenen Autoklaven unter Rühren (100 U/min) auf 185°C hochgeheizt und im Laufe von 46 Stunden zur Kristallisation gebracht. Nach dem Abkühlen wurde der Feststoff abfiltriert, neutralgewaschen, bei 120°C getrocknet und abschließend bei 500°C temperaturbehandelt.

Die Ausbeute an Borsilikatzeolith bezogen auf eingesetztes SiO₂ betrug 96 %. Die chemische Analyse des Produktes ergab eine Zusammensetzung von 97,1 Gew.-% SiO₂, 1,69 Gew.-% B₂O₃ und Spuren von 130 ppm Natrium sowie 1 200 ppm Al₂O₃. Das Produkt war vollkristallin und zeigte das für ein Borpentasil mit MFI-Struktur typische Pulverdiffraktogramm.

Die Kristalle hatten eine Größenverteilung von 5 bis 22 µm.

### Beispiel 4

Dieses Beispiel erläutert die alkalifreie Synthese von einheitlich großen Alupentasilkristallen.

In einem Stahlautoklaven wurden 0,043 kg Tetrapropylammoniumbromid, 0,446 kg Kieselsol LUDOX® AS-40, und 0,658 kg deionisiertes Wasser vorgelegt. Zu dieser Suspension wurden 26,5 g Aluminiumtriisopropylat und 0,426 kg einer wäßrigen Ammoniaklösung (25 Gew.-%) zugegeben. Die entstandene Suspension wurde im verschlossenen Autoklaven unter Rühren (100 U/min) auf 185°C hochgeheizt und im Laufe von 120 Stunden zur Kristallisation gebracht. Nach dem Abkühlen wurde der Feststoff abfiltriert, neutralgewaschen, bei 120oC getrocknet und abschließend bei 500oC temperaturbehandelt.

Die Ausbeute an Alusilikatzeolith bezogen auf eingesetztes SiO₂ betrug 95 %. Die chemische Analyse des Produktes ergab ein molares Verhältnis von Si/Al = 23.

Das Produkt war vollkristallin und zeigte das für ein Alupentasil mit MFI-Struktur typische Pulverdiffraktogramm. Die Kristalle hatten eine mittlere Größe von 30 bis 50 µm.

### Beispiel 5

Dieses Beispiel dient als Vergleich und beschreibt die Verwendung von in Beispiel 4 hergestellten Al-Pentasilzeolithkristallen als Heterogenkatalysatoren in einer konventionellen Festbettfahrweise zur Umwandlung von Ethylbenzol in Diethylbenzole.

Die in Beispiel 4 synthetisierten, getrockneten und kalzinierten Alupentasilkristalle werden mit Hilfe einer Presse zu 2mm Tabletten verpreßt (Preßdruck 10 N/m²) und über ein Sieb zu einer Kornfraktion von 1 bis 1,6 mm versplittet. Das so erhaltene Material wird in einer Menge von ca. 2,5 g genau eingewogen, in einen Rohrwendelreaktor (Länge 600 mm, Innendurchmesser 6 mm) eingefüllt und in einen Umluftofen eingesetzt.

Die katalytische Umsetzung erfolgte bei 250°C. Als Edukt wurde Ethylbenzol über einen Sättiger bei 20°C in einem Stickstoffstrom mit einer Strömungsgeschwindigkeit von 10 l/Stunde eingesetzt. Die Gesamtreaktionsdauer betrug 8 Stunden. Das entstandene Produktgemisch wurde gaschromatographisch analysiert.

Der erzielte Umsatz an Ethylbenzol betrug 3,4% wobei im Produkt eine Selektivität von 67 % zum p-Diethylbenzol und von 33% zum m-Diethylbenzol gefunden wurde.

### Beispiel 6

Dieses Beispiel beschreibt eine Möglichkeit, erfindungsgemäß Al-Pentasilzeolithe zu fixieren und die in Beispiel 5 genannte Reaktion in einem Wandreaktor dadurch mit hoher Selektivität zum Zielprodukt p-Diethylbenzol zu lenken.

Glasrohre mit einer Länge von 300 mm und einem Innendurchmesser von 6 mm wurden mit den in Beispiel 4 hergestellten Zeolithkristallen gefüllt und waagrecht liegend unter Drehen durch eine ringförmig angeordnete Heizzone auf 600 bis 650°C für die Dauer von 10 bis 30 Minuten aufgeheizt.

Nach dem Erkalten wurden die nicht an der Rohrinnenwand anhaftenden Kristalle entleert und das Rohr mittels einer Druckluftbehandlung innengereinigt. Die Belegung mit Zeolithkristallen wurde gravimetrisch bestimmt zu 167 g/m².

Die Einzelrohre wurden danach zu einem seriell angeordneten Modul mittels Glasübergangsstücken zusammengekoppelt. Das Modul wurde in einen Umluftofen eingesetzt und auf die Reaktionstemperatur von 250°C geheizt.

Die katalytische Umsetzung erfolgte bei 250°C in einem bei 20°C mit Ethylbenzol gesättigten Stickstoffstrom bei einer Strömungsgeschwindigkeit von 10 l/h.

Die entstandenen Reaktionsprodukte wurden gaschromatographisch charakterisiert. Bei einem Umsatz an Ethylbenzol von 2 bis 2,5 % wurde eine Selektivität von 100 % zum p-Diethylbenzol gefunden. Auch nach einer dreimaligen Reaktionsdauer von jeweils 6,7 Stunden wurden keine m- oder o-Diethylbenzole im Produktstrom beobachtet.

### Beispiel 7

In einem konventionellen Festbettreaktor wird als Vergleichsbeispiel die Umlagerung von Styroloxid zu p-Phenylacetaldehyd an einem Borzeolithkatalysator aus den in Beispiel 1 hergestellten Borpentasilzeolithkristallpulvern beschrieben.

Das Zeolithpulver aus den in Beispiel 1 hergestellten Borpentasilkristallen wurde mit einem mechanischen Preßwerkzeug zu 2 mm-Tabletten verpreßt. Die Tabletten wurden danach zu einer Siebfraktion von 1 bis 1,6 mm versplittet. In einen Rohrwendelreaktor wurden 3,5 g Katalysator eingebaut.

Der Reaktor wurde auf die Reaktionstemperatur von 240°C gebracht. Bei einem Druck von 12 mbar wurden Belastungen von 9,6 bis 37,8 g/h an Styroloxid (in einem Vorverdampfer auf 110°C erwärmt) über den Katalysator geleitet. Der Reaktionsaustrag wurde kondensiert und gaschromatographisch analysiert.

Bei einem Umsatz von 100 % an eingesetztem Styroloxid wurde nach sechsstündiger Reaktion eine Ausbeute an Phenylacetaldehyd größer 99.8 % gefunden.

Die Temperatur in der Katalysatorschüttung stieg dabei von 240°C auf 315°C an. Der gebrauchte Katalysator war schwarzbraun verklebt und ließ sich nur schwer aus dem Reaktor entfernen.

### Beispiel 8

An erfindungsgemäß in einem röhrenförmigen Wandreaktor mit einer Gesamtlänge von 600 mm fixierten Borzeolithkristallen wird die in Beispiel 7 genannte Umsetzung isotherm durchgeführt.

Bei einer Belastung von 15 g/h an Styroloxid und einem Druck von 15 mbar wurde nach dreitägiger Reaktionsdauer der Reaktionsaustrag kondensiert und gaschromatographisch analysiert.

Der Umsatz an eingesetztem Styroloxid betrug 100 % bei einer Ausbeute an Phenylacetaldehyd von größer 99.5 %. Eine Temperaturerhöhung im röhrenförmigen Wandreaktor über die Reaktortemperatur von 240°C hinaus wurde nicht beobachtet.

Das abgekühlte Glasrohr zeigte nach der Reaktion eine hellbeige Farbe. Die Regenerierung erfolgte durch Überleiten von Luft bei 450°C innerhalb von 30 Minuten.

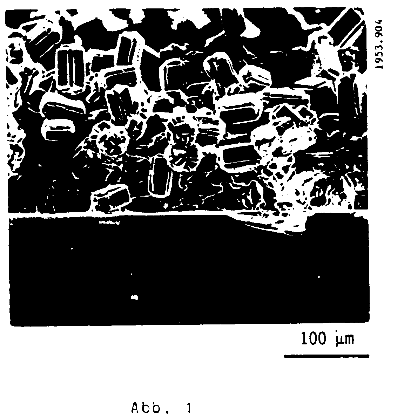

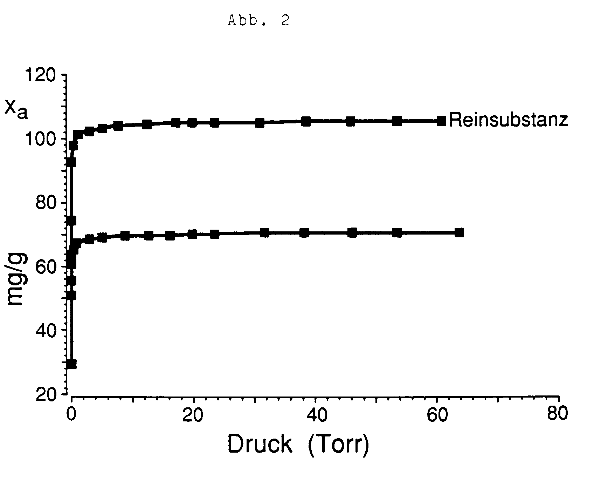

## Patentansprüche

1. Verfahren zur Fixierung großer zeolithischer und zeolithanaloger Molekularsieb-Kristalle von 3 bis 500 µm auf Formkörpern, dadurch gekennzeichnet, daß man unporöse Formkörper einsetzt und diese erweicht.

2. Verfahren zur Fixierung großer zeolithischer und zeolithanaloger Molekularsieb-Kristalle von 3 bis 500 µm auf Formkörpern nach Anspruch 1, dadurch gekennzeichnet, daß man als zeolithische und zeolithanaloge Molekularsiebe Kristalle der Zeolithtypen MFI, MEL, AFI, DOH, FAU, LTA oder DDR verwendet.

3. Verfahren zur Fixierung großer zeolithischer und zeolithanaloger Molekularsieb-Kristalle von 3 bis 500 µm auf Formkörpern nach Anspruch 1, dadurch gekennzeichnet, daß man als unporöse Formkörper Glas, Keramik, Metall, polymere Werkstoffe und/oder glas- und/oder kohlenstoffaserhaltige polymere Verbundwerkstoffe verwendet.

4. Verfahren zur Fixierung großer zeolithischer und zeolithanaloger Molekularsieb-Kristalle von 3 bis 500 µm auf Formkörpern nach Anspruch 1, dadurch gekennzeichnet, daß man als zeolithische und zeolithanaloge Molekularsiebe Kristalle des Pentasiltyps in der aziden H-Form, der Ammonium-Form oder in einer noch ein Amin oder ein quartäres Ammoniumsalz enthaltenden alkalifreien Form verwendet.

5. Verfahren zur katalytischen Umsetzung organischer Moleküle, dadurch gekennzeichnet, daß man die nach Anspruch 1 fixierten Molekularsieb-Kristalle von 3 bis 500 µm verwendet.

6. Verfahren zur Stofftrennung organischer isomerer Moleküle in Gemischen von linearen und verzweigten und/oder cyclischen gesättigten und/oder ungesättigten Kohlenwasserstoffen und aus Mischungen organischer und wäßriger Phasen, dadurch gekennzeichnet, daß man die nach Anspruch 1 fixierten Molekularsieb-Kristalle von 3 bis 500 µm einsetzt.

## Claims

1. A process for fixing large zeolite or zeolitelike molecular sieve crystals of from 3 to 500 µm on moldings, wherein nonporous moldings are used and these are softened.

2. A process for fixing large zeolite or zeolitelike molecular sieve crystals of from 3 to 500 µm on moldings as claimed in claim 1, wherein the zeolite or zeolite-like molecular sieves used are crystals of the zeolite types MFI, MEL, AFI, DOH, FAU, LTA or DDR.

3. A process for fixing large zeolite or zeolite-like molecular sieve crystals of from 3 to 500 µm on moldings as claimed in claim 1, wherein glass, ceramic, metal, polymeric materials and/or glass- and/or carbon-fiber-containing polymeric composites are used as nonporous moldings.

4. A process for fixing large zeolite or zeolite-like molecular sieve crystals of from 3 to 500 µm on moldings as claimed in claim 1, wherein the zeolite or zeolite-like molecular sieves used are crystals of the pentasil type in the azidic H form, in the ammonium form or in an alkali-free form still containing an amine or a quaternary ammonium salt.

5. A process for the catalytic conversion of organic molecules, wherein the molecular sieve crystals of from 3 to 500 µm fixed as claimed in claim 1 are used.

6. A process for the separation of organic isomeric molecules in mixtures of linear and branched and/or cyclic saturated and/or unsaturated hydrocarbons and from mixtures of organic and agueous phases, wherein the molecular sieve crystals of from 3 to 500 µm fixed as claimed in claim 1 are used.

## Revendications

1. Procédé de fixation de gros cristaux de tamis moléculaires zéolitiques et analogues aux zéolites, de 3 à 500 µm, sur des corps ou articles moulés, caractérisé en ce que l'on met en oeuvre des corps ou articles moulés non poreux et on ramollit ceux-ci.

2. Procédé de fixation de gros cristaux de tamis moléculaires zéolitiques et analogues aux zéolites, de 3 à 500 µm, sur des corps ou articles moulés suivant la revendication 1, caractérisé en ce que l'on utilise, à titre de cristaux de tamis moléculaires zéolitiques et analogues aux zéolites, des types de zéolites MFI, MEL, AFI, DOH, FAU, LTA ou DDR.

3. Procédé de fixation de gros cristaux de tamis moléculaires zéolitiques et analogues aux zéolites, de 3 à 500 µm, sur des corps ou articles moulés suivant la revendication 1, caractérisé en ce que l'on utilise, à titre de corps ou articles moulés non poreux, du verre, un matériau céramique, un métal, un matériau polymérique et/ou un matériau composition polymérique contenant des fibres de verre et/ou de carbone.

4. Procédé de fixation de gros cristaux de tamis moléculaires zéolitiques et analogues aux zéolites, de 3 à 500 µm, sur des corps ou articles moulés suivant la revendication 1, caractérisé en ce que l'on utilise, à titre de tamis moléculaires zéolitiques et analogues aux zéolites, des cristaux du type pentasile sous la forme H acide, sous la forme ammonium, ou sous une forme dépourvue d'alcali contenant encore une amine ou un sel d'ammonium quaternaire.

5. Procédé de réaction catalytique de molécules organiques, caractérisé en ce que l'on utilise les cristaux de tamis moléculaires fixés de 3 à 500 µm suivant la revendication 1.

6. Procédé de séparation des matières de molécules isomériques organiques en mélanges d'hydrocarbures linéaires et ramifiés et/ou cycliques, saturés et/ou insaturés et à partir de mélanges de phases organiques et aqueuses, caractérisé en ce que l'on met en oeuvre les cristaux de tamis moléculaires de 3 à 500 µm suivant la revendication 1.
